# EUROPEAN PATENT APPLICATION

(11) **EP 1 757 431 A1**
(43) Date of publication of application: **28.02.2007**
(21) Application number: 05709663.8
(22) Date of filing: 27.01.2005
(51) Int. Cl.: B29C 65/48, C09J 5/00, C09J 11/06, C08J 5/12

(54) **INTEGRAL MOLDINGS OF POLYAMIDE RESIN, PROCESS FOR PRODUCTION THEREOF, AND JOINTING AID FOR POLYAMIDE RESIN**

(30) Priority: 26.04.2004 JP 2004129387
(71) Applicant: Yamasei Kogyo., Ltd., Nagoya-shi Aichi 4570065 (JP); Tomoda, Koji, Yatomi-cho, Mizuho-ku Nagoya-shi, Aichi 4670031 (JP)
(72) Inventor: Tomoda, Koji, Nagoya-shi, Aichi 4670031 (JP)
(74) Representative: Koepe, Gerd L.
(86) International application number: PCT/JP2005/001569
(87) International publication number: WO 2005/102673

(57) **Abstract**

To provide a polyamide resin integrally molded product having high joining strength and excellent joining reliability, and a method for manufacturing the same, and also to provide a joining auxiliary capable of mutually joining polyamide resins with high joining strength. In manufacturing the polyamide resin integrally molded product by applying the joining auxiliary to a joint site of a polyamide resin molded product and welding a different polyamide resin which is to form an additive molded product part to the joint site, the joining auxiliary contains trihydroxybenzene and/or trihydroxybenzoic acid as a component (A) and an organic solvent which is capable of dissolving or dispersing the component (A) as a component (B). At this time, it is preferable for the component (A) to further contain dihydroxybenzene and/or dihydroxybenzoic acid.

## Description

### TECHNICAL FIELD

The present invention relates to a polyamide resin integrally molded product, a method for manufacturing the same, and a joining auxiliary suitably used for joining polyamide resins.

### BACKGROUND ART

A linear polymer having amide bonds as a repeating unit within the molecules is generally called a polyamide resin. Among polyamide resins, a resin mainly having aliphatic chains is in widespread use as "Nylon" (commercial name), typically including Nylon 6, Nylon 66 and the like.

The polyamide resin is a crystalline polymer in which hydrogen bonds can be formed between amide bonds of different polymer chains, and has a robust crystalline structure which is comprised of planes arranged in layers while the amide bonds are regularly hydrogen-bonded with each other within one plane.

Owing to polarity and the crystalline structure brought by such amide bonds, the polyamide resin has excellent resistance to a hydrocarbon-based solvent such as gasoline and oil, and relatively high heat resistance and strength; therefore, the polyamide resin is in widespread use as a resin material suitable for automotive parts, machine parts and the like.

In recent years, the automotive parts and the like have been getting more complicated in shape and larger in size, so that it has become difficult to obtain a polyamide resin integrally molded product having a desired shape by single injection molding, extrusion molding or the like. Therefore, an attempt is made to separately mold plural polyamide resin molded products, and mutually join the products to integrate into a polyamide resin integrally molded product of a desired shape.

For example, Japanese Patent Application Laid-Open No. 2000-61983 discloses a polyamide resin integrally molded product which is obtained by injection-molding a polyamide resin as a secondary molding material on a primary molded product consisting of a polyamide resin to mutually weld and integrate the primary molded product and an additive molded part made of the secondary molding material.

It is also known to manufacture a polyamide resin integrally molded product by mutually welding and integrating polyamide resin molded products by use of a welding method such as ultrasonic welding and vibration welding.

Further, it is also known to manufacture a polyamide resin integrally molded product by use of a resistance welding method by which a polyamide resin being a secondary molding material is injection-molded while a primary molded product consisting of a polyamide resin is melted by heating a conductive wire buried in the primary molded product, and the primary molded product and the additive molded product part are mutually welded.

However, conventionally known polyamide resin integrally molded products have a problem such as poor reliability and the like, resulting from insufficient joining strength. This is assumed to be attributable to the following reasons.

When a polyamide resin integrally molded product is manufactured by means of injection molding, a primary molded product consisting of a polyamide resin is set in a mold, and a melted polyamide resin which is to form an additive molded product part is injection-molded on the primary molded product.

It is considered that free amide bonds which do not take part in hydrogen bonding are present in a joint site of the primary molded product because polymer chains to be hydrogen-bonded therewith are generally absent.

However, the free amide bonds are unintentionally mutually bonded by the application of heat to the mold in injection molding or the like, causing association to the joint site surface of the primary molded product. Therefore, it is assumed that the free amide bonds are reduced significantly in the joint site surface of the primary molded product.

Accordingly, while the amide bonds on the primary molded product side and the amide bonds on the additive molded product side are not hydrogen-bonded, the primary molded product and the additive molded product are independently crystallized, and thereby the joining strength of the resulting integrated molded product is reduced considerably.

In addition to the above, the polyamide resin has an extremely narrow melting point width and an extremely short hardening time, compared with other resins. Therefore, this is also conceivably responsible for the insufficient joining of the primary molded product to the additive molded product.

The problem of the reduction in joining strength as described above can occur also in the case of manufacturing a polyamide resin integrally molded product by use of a welding method such as ultrasonic welding and vibration welding.

More specifically, when a polyamide resin integrally molded product is manufactured by ultrasonic welding or vibration welding, not only the joint site surfaces but also the whole joint sites are generally needed to be joined while being heated and melted by vibrational energy for ensuring sufficient joining strength.

However, joining of once-crystallized molded products needs application of enormous vibrational energy, so that a remelt and resolidified layer inferior in strength is remarkably produced in the joint sites.

Accordingly, it is difficult to obtain an integrally molded product having sufficient joining strength by simply using the conventional ultrasonic welding, vibration welding or the like. In addition, there is another problem that the joint sites have to be designed to be thicker than essentially required to ensure sufficient joining strength.

In addition, in the manufacture of a polyamide resin integrally molded product by resistance welding, the conductive wire must be buried in the primary molded product, leading to extremely poor work efficiency and an increased manufacturing cost. It is also assumed that the strength is reduced since a remelt and resolidified layer inferior in strength is produced by the heat generation of the conductive wire on the primary molded product side. Further, inclusion of the conductive wire in the integrally molded product is not preferred from the viewpoint of recycling.

From the point of the above-mentioned problems, the present invention thus provides a polyamide resin integrally molded product having high joining strength and excellent joining reliability, and a method for manufacturing the same. The present invention further provides a joining auxiliary capable of mutually joining polyamide resins with high joining strength.

### DISCLOSURE OF THE INVENTION

To achieve the objects and in accordance with the purpose of the present invention, a polyamide resin integrally molded product described in claim 1 includes a polyamide resin molded product to a joint site of which a joining auxiliary is applied, and a polyamide resin to form an additive molded product part which is welded to the joint site of the polyamide resin molded product to be integrated, where the joining auxiliary contains trihydroxybenzene and/or trihydroxybenzoic acid as a component (A) and an organic solvent which is capable of dissolving or dispersing the component (A) as a component (B).

In addition, a polyamide resin integrally molded product described in claim 2 includes a polyamide resin molded product and another polyamide resin molded product, to at least one joint site of the polyamide resin molded products, a joining auxiliary being applied to mutually weld and integrate the joint sites, where the joining auxiliary contains trihydroxybenzene and/or trihydroxybenzoic acid as a component (A) and an organic solvent which is capable of dissolving or dispersing the component (A) as a component (B).

A polyamide resin integrally molded product described in claim 3 is the polyamide resin integrally molded product according to claim 1 or 2, where the component (A) further contains dihydroxybenzene and/or dihydroxybenzoic acid.

A polyamide resin integrally molded product described in claim 4 is the polyamide resin integrally molded product according to any one of claims 1 to 3, where a content of the component (A) is not less than 1 wt% and not more than 50 wt%, and a content of the component (B) is not less than 50 wt% and not more than 99 wt%.

A polyamide resin integrally molded product described in claim 5 is the polyamide resin integrally molded product according to any one of claims 1 to 4, where the component (B) is a mixed organic solvent obtained by mixing two or more sorts of the organic solvents.

In addition, a method for manufacturing a polyamide resin integrally molded product described in claim 6 includes the steps of applying a joining auxiliary to a joint site of a polyamide resin molded product, and welding a polyamide resin which is to form an additive molded product part to the joint site of the polyamide resin molded product, where the joining auxiliary contains trihydroxybenzene and/or trihydroxybenzoic acid as a component (A) and an organic solvent which is capable of dissolving or dispersing the component (A) as a component (B).

In addition, a method for manufacturing a polyamide resin integrally molded product described in claim 7 includes the steps of applying a joining auxiliary to at least one joint site of polyamide resin molded products, and welding the joint sites mutually, where the joining auxiliary contains trihydroxybenzene and/or trihydroxybenzoic acid as a component (A) and an organic solvent which is capable of dissolving or dispersing the component (A) as a component (B).

A method for manufacturing the polyamide resin integrally molded product described in claim 8 is the method for manufacturing the polyamide resin integrally molded product according to claim 6 or 7, where the component (A) further contains dihydroxybenzene and/or dihydroxybenzoic acid.

A method for manufacturing the polyamide resin integrally molded product described in claim 9 is the method for manufacturing the polyamide resin integrally molded product according to any one of claims 6 to 8, where a content of the component (A) is not less than 1 wt% and not more than 50 wt%, and a content of the component (B) is not less than 50 wt% and not more than 99 wt%.

A method for manufacturing the polyamide resin integrally molded product described in claim 10 is the method for manufacturing the polyamide resin integrally molded product according to any one of claims 6 to 9, where the component (B) is a mixed organic solvent obtained by mixing two or more sorts of the organic solvents.

In addition, a joining auxiliary for polyamide resin described in claim 11 contains trihydroxybenzene and/or trihydroxybenzoic acid as a component (A) and an organic solvent which is capable of dissolving or dispersing the component (A) as a component (B).

A joining auxiliary for polyamide resin described in claim 12 is the joining auxiliary for polyamide resin according to claim 11, where the component (A) further contains dihydroxybenzene and/or dihydroxybenzoic acid.

A joining auxiliary for polyamide resin described in claim 13 is the joining auxiliary for polyamide resin according to claim 11 or 12, where a content of the component (A) is not less than 1 wt% and not more than 50 wt%, and a content of the component (B) is not less than 50 wt% and not more than 99 wt%.

A joining auxiliary for polyamide resin described in claim 14 is the joining auxiliary for polyamide resin according to any one of claims 11 to 13, where the component (B) is a mixed organic solvent obtained by mixing two or more sorts of the organic solvents.

The polyamide resin integrally molded product according to the present invention is obtained by welding the different polyamide resin which is to form the additive molded product part to the joint site of the polyamide resin molded product to integrate, the joint site surface-modified by the joining auxiliary, or by mutually welding the joint site of the polyamide resin molded product and the joint site of the different polyamide resin molded product to integrate, one or both of the joint sites surface-modified by the joining auxiliary.

As the joining auxiliary, used is the joining auxiliary containing the trihydroxybenzene and/or trihydroxybenzoic acid as the component (A) and the organic solvent which is capable of dissolving or dispersing the component (A) as the component (B).

Owning to this, high joining strength and excellent joining reliability can be ensured. In addition, high joining strength can be ensured without providing a so-called joining margin by thickening the joint site or the like.

When the joining auxiliary further contains the dihydroxybenzene and/or dihydroxybenzoic acid as the component (A), improvement in joining strength of the polyamide integrally molded product can be expected.

In addition, since the component (A) is rich in compounds having a surface modifying effect, there is an advantage of facilitating risk distribution for the compounds. There is also another advantage of increasing flexibility in adjusting the composition of the joining auxiliary so as to reduce a cost thereof in response to price fluctuation of the compounds.

When the content of the component (A) is within the range from not less than 1 wt% to not more than 50 wt%, and the content of the component (B) is within the range from not less than 50 wt% to not more than 99 wt%, the above-mentioned advantages can be further ensured.

When the mixed organic solvent obtained by mixing two or more sorts of the organic solvents capable of dissolving or dispersing the component (A) is used as the component (B) of the joining auxiliary, drying time by vaporization or the like of the joining auxiliary is easy to adjust and the joining auxiliary are excellent in coating properties compared with a case of using the organic solvent by one sort. Consequently, the joining auxiliary is uniformly applied to the joint site to surface-modify evenly, ensuring particularly excellent joining reliability.

The method for manufacturing the polyamide resin integrally molded product according to the present invention includes the steps of applying the joining auxiliary to the joint site of the polyamide resin molded product and welding the polyamide resin which is to form the additive molded product part to the joint site, or includes the steps of applying the joining auxiliary to the joint site of the polyamide resin molded product and/or the joint site of the different polyamide resin molded product and mutually welding the joint sites.

As the above-mentioned joining auxiliary, used is the joining auxiliary containing the trihydroxybenzene and/or trihydroxybenzoic acid as the component (A) and the organic solvent capable of dissolving or dispersing the component (A) as the component (B).

Therefore, a polyamide resin integrally molded product having high joining strength and excellent joining reliability can be obtained. Compared with a conventional manufacturing method, the polyamide resin-integrally molded product can be easily manufactured at low cost.

When the joining auxiliary further contains the dihydroxybenzene and/or dihydroxybenzoic acid as the component (A), improvement in joining strength of the resulting polyamide resin integrally molded product can be expected.

In addition, since the component (A) is rich in compounds having a surface modifying effect, there is an advantage of facilitating risk distribution for the compounds. There is also another advantage of increasing flexibility in adjusting the composition of the joining auxiliary so as to reduce a cost thereof in response to price fluctuation of the compounds.

When the content of the component (A) is within the range from not less than 1 wt% to not more than 50 wt%, and the content of the component (B) is within the range from not less than 50 wt% to not more than 99 wt%, the above-mentioned advantages can be further ensured.

When the mixed organic solvent obtained by mixing two or more sorts of the organic solvents capable of dissolving or dispersing the component (A) is used as the component (B) of the joining auxiliary, drying time by vaporization or the like of the joining auxiliary is easy to adjust and the joining auxiliary are excellent in coating properties compared with a case of using the organic solvent by one sort. Consequently, the joining auxiliary can be uniformly applied to the joint site to surface-modify evenly, ensuring particularly excellent joining reliability.

The joining auxiliary for polyamide resin according to the present invention can mutually join polyamide resins with high joining strength since it contains the trihydroxybenzene and/or trihydroxybenzoic acid as the component (A) and the organic solvent which is capable of dissolving or dispersing the component (A) as the component (B).

When the joining auxiliary further contains the dihydroxybenzene and/or dihydroxybenzoic acid as the component (A), improvement in joining strength in mutually joining polyamide resins can be expected.

In addition, since the component (A) is rich in compounds having a surface modifying effect, there is an advantage of facilitating risk distribution for the compounds. There is also another advantage of increasing flexibility in adjusting the composition of the joining auxiliary so as to reduce a cost thereof in response to price fluctuation of the compounds.

When the content of the component (A) is within the range from not less than 1 wt% to not more than 50 wt%, and the content of the component (B) is within the range from not less than 50 wt% to not more than 99 wt%, the above-mentioned advantages can be further ensured.

When the mixed organic solvent obtained by mixing two or more sorts of the organic solvents capable of dissolving or dispersing the component (A) is used as the component (B) of the joining auxiliary, drying time by vaporization or the like of the joining auxiliary is easy to adjust and the joining auxiliary are excellent in coating properties compared with a case of using the organic solvent by one sort. Consequently, the joining auxiliary can be uniformly applied to the joint site to surface-modify evenly.

### BRIEF DESCRIPTION OF THE DRAWINGS

Figs. 1A and 1B are external perspective views respectively showing a test piece P and a primary molded part P1 constituting it, which are consistent with the embodiment of the present invention.
Fig. 2 is an external perspective view showing a mold used for molding the test piece P consistent with the embodiment of the present invention by injection molding.

### BEST MODE FOR CARRYING OUT THE INVENTION

A preferred embodiment of the present invention will be further described in detail.

A polyamide resin integrally molded product according to the present invention (hereinafter referred to as the "present polyamide resin integrally molded product") is obtained by applying a joining auxiliary according to the present invention (hereinafter referred to as the "present joining auxiliary") to a joint site of a polyamide resin molded product, and welding a different polyamide resin that is to form an additive molded product part to this joint site, or by applying the present joining auxiliary to a joint site of a polyamide resin molded product and/or a joint site of a different polyamide resin molded product, and mutually welding these joint sites.

As the present polyamide resin integrally molded product which is obtained by the former manner, specifically cited is an integrally molded product which can be obtained by applying the present joining auxiliary to a joint site of a polyamide resin molded product, inserting the molded product into a mold, newly injecting a melted polyamide resin thereinto, and welding the additive molded product part to the polyamide resin molded product.

On the other hand, as the present polyamide resin integrally molded product which is obtained by the latter manner, specifically cited is an integrally molded product which can be obtained by applying the present joining auxiliary to a joint site of a polyamide resin molded product and/or a joint site of a different polyamide resin molded product, and mutually welding the joint sites by various welding methods associated with heat melting of a resin such as ultrasonic welding, vibration welding, hot plate welding, hot air welding, high frequency welding, spin welding, friction welding, laser welding, electromagnetic induction welding, and infrared welding.

As the above-described polyamide resin, specifically named are aliphatic polyamides such as Nylon 6, Nylon 66, Nylon MX6, Nylon 11, Nylon 12, Nylon 46, Nylon 610 and Nylon 612, aromatic polyamides, and the like, which may be employed by one sort, or more than one sort in combination. Polymer alloy-based resins containing such polyamide resins can also be used.

Besides, the polyamide resin integrally molded product and the polyamide resin molded product may take various shapes such as a hollow shape, which can be selected as appropriate according to the purpose of use.

In addition, the polyamide resin molded product may be obtained by injection molding, blow molding, extrusion molding, transfer molding, compression molding, cutting work or the like. The polyamide resin molded product may have plural joint sites, which is not limited in particular.

Hereinafter, the present joining auxiliary used in the manufacture of the present polyamide resin integrally molded product will be described.

The present joining auxiliary contains trihydroxybenzene and/or trihydroxybenzoic acid as a component (A) and an organic solvent which is capable of dissolving or dispersing the component (A) as a component (B).

For the trihydroxybenzene in the component (A), named are 1,2,3-trihydroxybenzene (CAS No. RN [87-66-1], pyrogallol), 1,2,4-trihydroxybenzene (CAS No. RN [533-73-3]), 1,3,5-trihydroxybenzene (CAS No. RN [108-73-6]), and 1,3,5-trihydroxybenzene dehydrate (CAS No. RN [6099-90-7]).

In addition, for the trihydroxybenzoic acid, named are 2,3,4-trihydroxybenzoic acid (CAS No. RN [610-02-6]), 2,4,6-trihydroxybenzoic acid (CAS No. RN [83-30-79]), 2,4,6-trihydroxybenzoic acid monohydrate (CAS NO. RN [71989-93-0]), 3, 4, 5-trihydroxybenzoic acid (CAS No. RN [149-91-7], gallic acid), and 3,4,5-trihydroxybenzoic acid monohydrate (CAS No. RN [5995-86-8]).

The present joining auxiliary may further contain dihydroxybenzene and/or dihydroxybenzoic acid. This is because joining strength of the polyamide resin integrally molded product tends to be improved as the content of the component (A) is increased.

In addition, if the component (A) is rich in such compounds that have a surface modifying effect, there is also an advantage of facilitating risk dispersion for the compounds. There is also another advantage of adjusting the composition of the joining auxiliary so as to reduce a cost thereof in response to price fluctuation of the compounds.

For the dihydroxybenzene, named are 1,2-dihydroxybenzene (CAS No. RN [120-80-9]), 1,3-dihydroxybenzene (CAS No. [108-46-3]), and 1,4-dihydroxybenzene (CAS No. RN [123-31-9]).

For the dihydroxybenzoic acid, named are 2,3-dihydroxybenzoic acid (CAS No. RN [303-38-8]), 2,4-dihydroxybenzoic acid (CAS No. RN [89-86-1]), 2,5-dihydroxybenzoic acid (CAS No. RN [490-79-9]), 2,6-dihydroxybenzoic acid (CAS No. RN [303-07-1]), 3,4-dihydroxybenzoic acid (CAS No. RN [99-50-3]), and 3,5-dihydroxybenzoic acid (CAS No. RN [99-10-5]).

Meanwhile, as the organic solvent, either volatile one or nonvolatile one may be used while the volatile one is preferably used. Additionally, organic solvents capable of slightly dissolving a polyamide resin can be suitably used.

For the organic solvent, specifically named are alcohols having 1 to 6 carbon atoms, ketones or aldehydes having 1 to 6 carbon atoms, and nitriles having 1 to 6 carbon atoms, and more specifically named are methanol, ethanol, isopropyl alcohol, acetone, acetonitrile and the like, which may be employed by one sort, or more than one sort in combination.

At this time, when more than one sort of organic solvents are mixed and used as a mixed organic solvent, there is an advantage of enabling the drying time to be adjusted as appropriate so that the present joining auxiliary is not immediately dried after applied to the joint site, taking into consideration the ambient temperature and the working environment in which the present joining auxiliary is used.

As the mixing ratio of the component (A) to the component (B), it is preferable that the content of the component (A) is within the range from not less than 1 wt% to not more than 50 wt%, and the content of the component (B) is within the range from not less than 50 wt% to not more than 99 wt%, from the viewpoint of providing high joining strength and the like.

More preferably, the content of the component (A) is within the range from not less than 5 wt% to not more than 25 wt%, and the content of the component (B) is within the range from not less than 75 wt% to not more than 95 wt%, and still more preferably, the content of the component (A) is within the range from not less than 5 wt% to not more than 15 wt%, and the content of the component (B) within the range from not less than 85 wt% to not more than 95 wt%.

At this time, it is not preferable for the content of the component (A) to exceed 50 wt% and for the content of the component (B) to fall below 50 wt% since it tends to be difficult for the component (A) to be dissolved in the component (B).

Meanwhile, it is not preferable for the content of the component (A) to fall below 1 wt% and for the content of the component (B) to exceed 99 wt% since the joining strength of the polyamide resin integrally molded product tends to be reduced.

In addition, the present joining auxiliary may be manufactured by any manufacturing method by which the component (A) can be uniformly dissolved or dispersed in the component (B), which is not limited in particular.

Besides, the above-mentioned polyamide resin, a dye, a thickener, an antioxidant and the like may be added to the present joining auxiliary to an extent such that a surface modifying effect on the polyamide resin is not impaired.

For example, in the case of adding the polyamide resin, joining reliability can be increased. This is assumed because asperities on the joint site surface are reduced by a contact area increased by the added polyamide resin.

At this time, as the polyamide resin to be added, a polyamide resin of the same type as the molded product to be joined to is preferably used.

In addition, for example, in the case of adding a dye, an application state of the join site can be visually checked, allowing application workability to improve to decrease unevenness in application.

In addition, for example, in the case of adding a thickener, an effect such as dropping prevention, uniform coating and the like can be gained in applying the joining auxiliary.

As an application manner of the present joining auxiliary to the joint site, it is essential only that the present joining auxiliary can be thinly spread and applied by a fixed quantity to the joint site, which is not limited in particular hereto. Specifically, various application methods such as application by brush and application by sponge can be employed.

Here, the reason why the present polyamide resin integrally molded product has high joining strength is assumed as follows.

When the present joining auxiliary is applied to the joint site of the polyamide resin molded product, the polyamide resin in the joint site surface is activated by a reduction effect of the component (A). Then, when the melted polyamide resin is provided to the activated joint site, or the joint sites are mutually welded, both of the joint sites are strongly connected to be integrated mainly by chemical bonding in a recrystallizing process of the melted polyamide resin.

Therefore, the resulting polyamide resin integrally molded product has high joining strength bearing comparison to a molded product which is integrally molded at a time.

### EXAMPLES

Hereinafter, the present invention will be described more specifically referring to Examples.

### [Preparation of Joining Auxiliaries Consistent with the Present Examples]

Firstly, joining auxiliaries consistent with the present Examples were prepared according to the following procedure. As shown in Tables 1 to 15 described below, the joining auxiliaries consistent with the present Examples were prepared by blending 1,2,3-trihydroxybenzene (pyrogallol), 3,4,5-trihydroxybenzoic acid (gallic acid), 1,3-dihydroxybenzene, and 3,5-dihydroxybenzoic acid as the component (A) with methanol and isopropyl alcohol as the component (B) so as to have predetermined weight ratios followed by sufficient mixing by use of a stirrer.

Besides, the joining auxiliaries of Examples 35 to 68 in the tables have the same compositions as the joining auxiliaries of Examples 1 to 34.

1,2,3-trihydroxybenzene, 3,4,5-trihydroxybenzoic acid, 1,3-dihydroxybenzene, 3,5-dihydroxybenzoic acid, methanol and isopropyl alcohol used therein were manufactured by Wako Pure Chemical Industries. (Preparation of Test Pieces Consistent with present

### Examples)

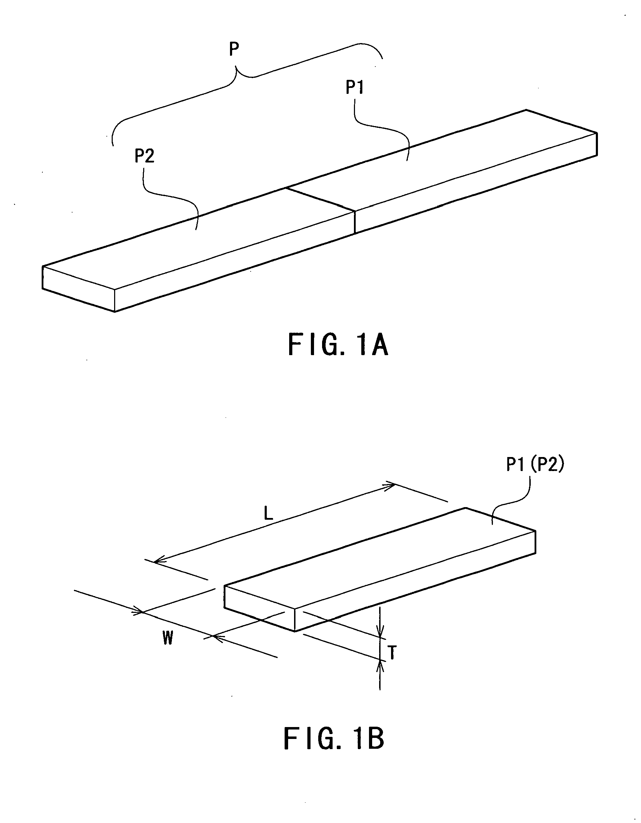

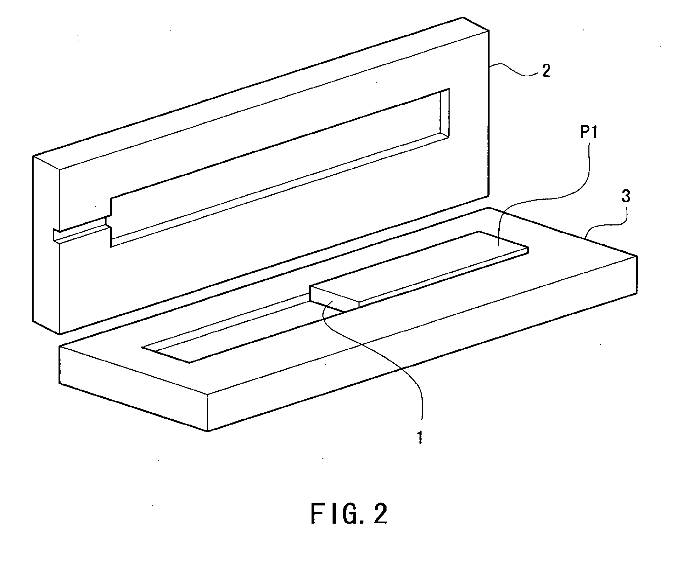

Figs. 1A and 1B are external perspective views respectively showing a test piece P and a primary molded part P1 constituting it. Fig. 2 is an external perspective view showing a mold used for molding the test piece P by injection molding.

The test pieces P consisting of a polyamide resin were produced by injection molding according to the following procedure: the present joining auxiliaries consistent with the present Examples were applied uniformly by use of a brush to joint end surfaces 1 of the primary molded parts P1 preliminarily molded by injection molding, and the molded parts were set in dies 2 and 3, and then additive molded parts P2 were added thereto by injection, whereby the test pieces P consistent with the present Examples in which the primary molded parts P1 and the additive molded parts P2 were welded to be integrated were produced.

The test pieces P were molded in a rectangular shape with a uniform thickness. The primary molded parts P1 and the additive molded parts P2 have the same shape (Length: L × Width: W × Thickness: T = 40×10×3 mm), and the test pieces P formed by mutually joining both the parts have a total length of 80 mm.

As a material for the test pieces P, Nylon 6 resin (manufactured by Toray Industries, "AMILAN CM 1026"), Nylon 66 resin (manufactured by Du Pont, "ZYTEL 101L"), or Nylon 12 resin (manufactured by Daicel-Degussa, "DAIAMID L1640") was used.

Conditions of injection molding were set as follows. As an injection molding device, "SE-18S" manufactured by Sumitomo Heavy Industries was used. The molding temperatures were set to 240-245-240-235°C in order from the injection nozzle for Nylon 6, 290-295-290-285°C in order from the injection nozzle for Nylon 66, and 230-235-230-225°C in order from the injection nozzle for Nylon 12.

The molding temperatures were set to 65°C in molding the primary molded part P1 and 95°C in molding the secondary molded part P2 for Nylon 6 and Nylon 66. The temperatures were set to 50°C in molding both the primary molded part P1 and the secondary molded part P2 for Nylon 12.

### (Evaluation of Test Pieces Consistent with Present Examples)

The test pieces P were evaluated as follows: the test pieces P were subjected to a tension test in a thermostatic chamber at a room temperature of 23°C and a humidity of 50% to measure the maximum tensile strengths at which the test pieces P were fractured (sample number: N = 5). At this time, the test rate was set to 5 mm/min. As a tension testing machine, a universal material testing machine (INSTRON 4505) was used.

### (Test Results of Joining Auxiliaries and Test Pieces Consistent with Present Examples)

The test results of the joining auxiliaries and the test pieces consistent with the present Examples are shown in Tables 1 to 15.

Besides, the test pieces of Examples 1 to 34 consist of Nylon 6 resin, the test pieces of Examples 35 to 68 consist of Nylon 66 resin, and the test pieces of Examples 69 to 71 consist of Nylon 12 resin.

**[Table 1]**

| | | Example 1 | Example 2 | Example 3 | Example 4 | Example 5 |
|---|---|---|---|---|---|---|
| 1,2,3-trihydroxybenzene | (wt%) | 4.0 | 8.0 | 12.0 | 16.0 | 20.0 |
| 3,4,5-trihydroxybenzoic Acid | (wt%) | | | | | |
| 1,3-dihydroxybenzene | (wt%) | | | | | |
| 3,5-dihydroxybenzoic Acid | (wt%) | | | | | |
| Methanol | (wt%) | 48.0 | 46.0 | 44.0 | 42.0 | 40.0 |
| Isopropyl Alcohol | (wt%) | 48.0 | 46.0 | 44.0 | 42.0 | 40.0 |
| Tensile Strength | (MPa) | 46.5 | 49.4 | 58.5 | 60.8 | 54.3 |
| Standard Deviation | (MPa) | 5.9 | 8.2 | 9.3 | 9.1 | 7.4 |

**[Table 2]**

| | | Example 6 | Example 7 | Example 8 | Example 9 | Example 10 |
|---|---|---|---|---|---|---|
| 1,2,3-trihydroxybenzene | (wt%) | 24.0 | 28.0 | | | |
| 3,4,5-trihydroxybenzoic Acid | (wt%) | | | 4.0 | 8.0 | 12.0 |
| 1,3-dihydroxybenzene | (wt%) | | | | | |
| 3,5-dihydroxybenzoic Acid | (wt%) | | | | | |
| Methanol | (wt%) | 38.0 | 36.0 | 48.0 | 46.0 | 44.0 |
| Isopropyl Alcohol | (wt%) | 38.0 | 36.0 | 48.0 | 46.0 | 44.0 |
| Tensile Strength | (MPa) | 48.2 | 44.6 | 53.2 | 51.9 | 56.5 |
| Standard Deviation | (MPa) | 4.4 | 6.8 | 8.3 | 5.9 | 7.2 |

**[Table 3]**

| | | Example 11 | Example 12 | Example 13 | Example 14 | Example 15 |
|---|---|---|---|---|---|---|
| 1,2,3-trihydroxybenzene | (wt%) | | | | | 4.0 |
| 3,4,5-trihydroxybenzoic Acid | (wt%) | 16.0 | 20.0 | 24.0 | 28.0 | 4.0 |
| 1,3-dihydroxybenzene | (wt%) | | | | | |
| 3,5-dihydroxybenzoic Acid | (wt%) | | | | | |
| Methanol | (wt%) | 42.0 | 40.0 | 38.0 | 36.0 | 46.0 |
| Isopropyl Alcohol | (wt%) | 42.0 | 40.0 | 38.0 | 36.0 | 46.0 |
| Tensile Strength | (MPa) | 58.3 | 61.2 | 53.8 | 56.2 | 49.3 |
| Standard Deviation | (MPa) | 6.1 | 5.5 | 6.8 | 4.5 | 6.5 |

**[Table 4]**

| | | Example 16 | Example 17 | Example 18 | Example 19 | Example 20 |
|---|---|---|---|---|---|---|
| 1,2,3-trihydroxybenzene | (wt%) | 8.0 | 12.0 | 8.0 | 12.0 | 16.0 |
| 3,4,5-trihydroxybenzoic Acid | (wt%) | 8.0 | 12.0 | | | |
| 1,3-dihydroxybenzene | (wt%) | | | 4.0 | 8.0 | 8.0 |
| 3,5-dihydroxybenzoic Acid | (wt%) | | | | | |
| Methanol | (wt%) | 42.0 | 38.0 | 44.0 | 40.0 | 38.0 |
| Isopropyl Alcohol | (wt%) | 42.0 | 38.0 | 44.0 | 40.0 | 38.0 |
| Tensile Strength | (MPa) | 64.5 | 62.4 | 57.1 | 65.9 | 53.5 |
| Standard Deviation | (MPa) | 8.3 | 9.0 | 6.2 | 10.1 | 3.9 |

**[Table 5]**

| | | Example 21 | Example 22 | Example 23 | Example 24 | Example 25 |
|---|---|---|---|---|---|---|
| 1,2,3-trihydroxybenzene | (wt%) | | | | 8.0 | 12.0 |
| 3,4,5-trihydroxybenzoic Acid | (wt%) | 8.0 | 12.0 | 16.0 | | |
| 1,3-dihydroxybenzene | (wt%) | 4.0 | 8.0 | 8.0 | | |
| 3,5-dihydroxybenzoic Acid | (wt%) | | | | 4.0 | 8.0 |
| Methanol | (wt%) | 44.0 | 40.0 | 38.0 | 44.0 | 40.0 |
| Isopropyl Alcohol | (wt%) | 44.0 | 40.0 | 38.0 | 44.0 | 40.0 |
| Tensile Strength | (MPa) | 63.0 | 58.1 | 55.5 | 58.5 | 63.9 |
| Standard Deviation | (MPa) | 7.1 | 8.9 | 7.3 | 9.1 | 6.2 |

**[Table 6]**

| | | Example 26 | Example 27 | Example 28 | Example 29 | Example 30 |
|---|---|---|---|---|---|---|
| 1,2,3-trihydroxybenzene | (wt%) | 16.0 | | | | 6.0 |
| 3,4,5-trihydroxybenzoic Acid | (wt%) | | 8.0 | 12.0 | 16.0 | 6.0 |
| 1,3-dihydroxybenzene | (wt%) | | | | | 4.0 |
| 3,5-dihydroxybenzoic Acid | (wt%) | 8.0 | 4.0 | 8.0 | 8.0 | |
| Methanol | (wt%) | 38.0 | 44.0 | 40.0 | 38.0 | 42.0 |
| Isopropyl Alcohol | (wt%) | 38.0 | 44.0 | 40.0 | 38.0 | 42.0 |
| Tensile Strength | (MPa) | 65.7 | 59.5 | 49.6 | 66.0 | 62.1 |
| Standard Deviation | (MPa) | 7.3 | 10.2 | 8.3 | 7.9 | 15.1 |

**[Table 7]**

| | | Example 31 | Example 32 | Example 33 | Example 34 |
|---|---|---|---|---|---|
| 1,2,3-trihydroxybenzene | (wt%) | 6.0 | 8.0 | | 4.0 |
| 3,4,5-trihydroxybenzoic Acid | (wt%) | 6.0 | | 8.0 | 4.0 |
| 1,3-dihydroxybenzene | (wt%) | | 4.0 | 4.0 | 4.0 |
| 3,5-dihydroxybenzoic Acid | (wt%) | 4.0 | 4.0 | 4.0 | 4.0 |
| Methanol | (wt%) | 42.0 | 42.0 | 42.0 | 42.0 |
| Isopropyl Alcohol | (wt%) | 42.0 | 42.0 | 42.0 | 42.0 |
| Tensile Strength | (MPa) | 69.8 | 66.9 | 60.1 | 64.6 |
| Standard Deviation | (MPa) | 6.9 | 8.2 | 9.3 | 4.2 |

**[Table 8]**

| | | Example 35 | Example 36 | Example 37 | Example 38 | Example 39 |
|---|---|---|---|---|---|---|
| 1,2,3-trihydroxybenzene | (wt%) | 4.0 | 8.0 | 12.0 | 16.0 | 20.0 |
| 3,4,5-trihydroxybenzoic Acid | (wt%) | | | | | |
| 1,3-dihydroxybenzene | (wt%) | | | | | |
| 3,5-dihydroxybenzoic Acid | (wt%) | | | | | |
| Methanol | (wt%) | 48.0 | 46.0 | 44.0 | 42.0 | 40.0 |
| Isopropyl Alcohol | (wt%) | 48.0 | 46.0 | 44.0 | 42.0 | 40.0 |
| Tensile Strength | (MPa) | 52.6 | 70.9 | 72.3 | 68.5 | 63.2 |
| Standard Deviation | (MPa) | 5.8 | 9.1 | 4.5 | 6.3 | 3.9 |

**[Table 9]**

| | | Example 40 | Example 41 | Example 42 | Example 43 | Example 44 |
|---|---|---|---|---|---|---|
| 1,2,3-trihydroxybenzene | (wt%) | 24.0 | 28.0 | | | |
| 3,4,5-trihydroxybenzoic Acid | (wt%) | | | 4.0 | 8.0 | 12.0 |
| 1,3-dihydroxybenzene | (wt%) | | | | | |
| 3,5-dihydroxybenzoic Acid | (wt%) | | | | | |
| Methanol | (wt%) | 38.0 | 36.0 | 48.0 | 46.0 | 44.0 |
| Isopropyl Alcohol | (wt%) | 38.0 | 36.0 | 48.0 | 46.0 | 44.0 |
| Tensile Strength | (MPa) | 59.8 | 58.2 | 62.3 | 60.4 | 58.4 |
| Standard Deviation | (MPa) | 10.6 | 11.2 | 5.0 | 5.8 | 9.2 |

**[Table 10]**

| | | Example 45 | Example 46 | Example 47 | Example 48 | Example 49 |
|---|---|---|---|---|---|---|
| 1,2,3-trihydroxybenzene | (wt%) | | | | | 4.0 |
| 3,4,5-trihydroxybenzoic Acid | (wt%) | 16.0 | 20.0 | 24.0 | 28.0 | 4.0 |
| 1,3-dihydroxybenzene | (wt%) | | | | | |
| 3,5-dihydroxybenzoic Acid | (wt%) | | | | | |
| Methanol | (wt%) | 42.0 | 40.0 | 38.0 | 36.0 | 46.0 |
| Isopropyl Alcohol | (wt%) | 42.0 | 40.0 | 38.0 | 36.0 | 46.0 |
| Tensile Strength | (MPa) | 66.9 | 59.0 | 61.3 | 64.5 | 66.2 |
| Standard Deviation | (MPa) | 8.9 | 9.9 | 9.5 | 10.5 | 5.6 |

**[Table 11]**

| | | Example 50 | Example 51 | Example 52 | Example 53 | Example 54 |
|---|---|---|---|---|---|---|
| 1,2,3-trihydroxybenzene | (wt%) | 8.0 | 12.0 | 8.0 | 12.0 | 16.0 |
| 3,4,5-trihydroxybenzoic Acid | (wt%) | 8.0 | 12.0 | | | |
| 1,3-dihydroxybenzene | (wt%) | | | 4.0 | 8.0 | 8.0 |
| 3,5-dihydroxybenzoic Acid | (wt%) | | | | | |
| Methanol | (wt%) | 42.0 | 38.0 | 44.0 | 40.0 | 38.0 |
| Isopropyl Alcohol | (wt%) | 42.0 | 38.0 | 44.0 | 40.0 | 38.0 |
| Tensile Strength | (MPa) | 63.2 | 67.8 | 64.5 | 69.6 | 60.5 |
| Standard Deviation | (MPa) | 6.3 | 9.4 | 7.3 | 8.6 | 4.8 |

**[Table 12]**

| | | Example 55 | Example 56 | Example 57 | Example 58 | Example 59 |
|---|---|---|---|---|---|---|
| 1,2,3-trihydroxybenzene | (wt%) | | | | 8.0 | 12.0 |
| 3,4,5-trihydroxybenzoic Acid | (wt%) | 8.0 | 12.0 | 16.0 | | |
| 1,3-dihydroxybenzene | (wt%) | 4.0 | 8.0 | 8.0 | | |
| 3,5-dihydroxybenzoic Acid | (wt%) | | | | 4.0 | 8.0 |
| Methanol | (wt%) | 44.0 | 40.0 | 38.0 | 44.0 | 40.0 |
| Isopropyl Alcohol | (wt%) | 44.0 | 40.0 | 38.0 | 44.0 | 40.0 |
| Tensile Strength | (MPa) | 61.1 | 64.4 | 67.7 | 61.9 | 64.8 |
| Standard Deviation | (MPa) | 10.3 | 12.2 | 8.2 | 8.5 | 4.3 |

**[Table 13]**

| | | Example 60 | Example 61 | Example 62 | Example 63 | Example 64 |
|---|---|---|---|---|---|---|
| 1,2,3-trihydroxybenzene | (wt%) | 16.0 | | | | 6.0 |
| 3,4,5-trihydroxybenzoic Acid | (wt%) | | 8.0 | 12.0 | 16.0 | 6.0 |
| 1,3-dihydroxybenzene | (wt%) | | | | | 4.0 |
| 3,5-dihydroxybenzoic Acid | (wt%) | 8.0 | 4.0 | 8.0 | 8.0 | |
| Methanol | (wt%) | 38.0 | 44.0 | 40.0 | 38.0 | 42.0 |
| Isopropyl Alcohol | (wt%) | 38.0 | 44.0 | 40.0 | 38.0 | 42.0 |
| Tensile Strength | (MPa) | 58.7 | 69.9 | 71.0 | 68.2 | 69.5 |
| Standard Deviation | (MPa) | 6.1 | 6.3 | 4.3 | 4.8 | 10.5 |

**[Table 14]**

| | | Example 65 | Example 66 | Example 67 | Example 68 |
|---|---|---|---|---|---|
| 1,2,3-trihydroxybenzene | (wt%) | 6.0 | 8.0 | | 4.0 |
| 3,4,5-trihydroxybenzoic Acid | (wt%) | 6.0 | | 8.0 | 4.0 |
| 1,3-dihydroxybenzene | (wt%) | | 4.0 | 4.0 | 4.0 |
| 3,5-dihydroxybenzoic Acid | (wt%) | 4.0 | 4.0 | 4.0 | 4.0 |
| Methanol | (wt%) | 42.0 | 42.0 | 42.0 | 42.0 |
| Isopropyl Alcohol | (wt%) | 42.0 | 42.0 | 42.0 | 42.0 |
| Tensile Strength | (MPa) | 72.6 | 70.8 | 71.9 | 66.3 |
| Standard Deviation | (MPa) | 5.4 | 8.2 | 9.9 | 9.6 |

**[Table 15]**

| | | Example 69 | Example 70 | Example 71 |
|---|---|---|---|---|
| 1,2,3-trihydroxybenzene | (wt%) | 8.0 | | 2.0 |
| 3,4,5-trihydroxybenzoic Acid | (wt%) | | 8.0 | 8.0 |
| 1,3-dihydroxybenzene | (wt%) | | 8.0 | 6.0 |
| 3,5-dihydroxybenzoic Acid | (wt%) | 8.0 | | |
| Methanol | (wt%) | 42.0 | 42.0 | 42.0 |
| Isopropyl Alcohol | (wt%) | 42.0 | 42.0 | 42.0 |
| Tensile Strength | (MPa) | 37.2 | 40.8 | 29.9 |
| Standard Deviation | (MPa) | 3.6 | 1.8 | 9.3 |

### (Test Results of Test Pieces Consistent with Present Examples)

Test pieces consistent with Comparative Examples 1 to 6 will be described first.

### (Comparative Example 1)

A test piece consistent with Comparative Example 1 was produced using Nylon 6 resin in the same manner as the test pieces consistent with the present Examples except for molding the whole body into the same shape as the test piece P by single injection molding.

The tensile strength of the test piece consistent with Comparative Example 1 was 76.3 MPa with a standard deviation of 0.8 MPa.

### (Comparative Example 2)

A test piece consistent with Comparative Example 2 was produced in the same manner as the test pieces consistent with the present Examples except for applying no joining auxiliary to a joining end surface 1 of its primary molded part P1. Besides, as a material for this test piece, Nylon 6 resin was used.

The tensile strength of the test piece consistent with Comparative Example 2 was 13.3 MPa with a standard deviation of 9.2 MPa.

### (Comparative Example 3)

A test piece consistent with Comparative Example 3 was produced using Nylon 66 resin in the same manner as the test pieces consistent with the present Examples except for molding the whole body into the same shape as the test piece P by single injection molding.

The tensile strength of the test piece consistent with Comparative Example 3 was 78.8 MPa with a standard deviation of 1.8 MPa.

### (Comparative Example 4)

A test piece consistent with Comparative Example 4 was produced in the same manner as the test pieces consistent with the present Examples except for applying no joining auxiliary to a joining end surface 1 of its primary molded part P1. Besides, as a material for this test piece, Nylon 66 resin was used.

The tensile strength of the test piece consistent with Comparative Example 4 was 6.1 MPa with a standard deviation of 1.5 MPa.

### (Comparative Example 5)

A test piece consistent with Comparative Example 5 was produced using Nylon 12 resin in the same manner as the test pieces consistent with the present Examples except for molding the whole body into the same shape as the test piece P by single injection molding.

The tensile strength of the test piece consistent with Comparative Example 5 was 43.1 MPa with a standard deviation of 0.3 MPa.

### (Comparative Example 6)

A test piece consistent with Comparative Example 6 was produced in the same manner as the test pieces consistent with the present Examples except for applying no joining auxiliary to a joining end surface 1 of its primary molded part P1. Besides, as a material for this test piece, Nylon 12 resin was used.

The tensile strength of the test piece consistent with Comparative Example 6 was 5.9 MPa with a standard deviation of 0.9 MPa.

### (Consideration of Test Results)

It was shown that the test pieces consistent with Examples 1 to 34 (using Nylon 6) have joining strengths bearing comparison with that of the test piece consistent wit Comparative Example 1 produced by single injection molding.

Similarly, it was shown that the test pieces consistent with Examples 35 to 68 (using Nylon 66) also have joining strengths bearing comparison with that of the test piece consistent with Comparative Example 3 formed by single injection molding.

Similarly, it was shown that the test pieces consistent with Examples 69 to 71 (using Nylon 12) also have joining strengths bearing comparison with that of the test piece of Comparative Example 5 formed by single injection molding.

In addition, it was shown that the test pieces consistent with Examples 1 to 34 have excellent joining strengths compared with the test piece consistent with Comparative Example 2 in which joining was performed without using any joining auxiliary.

Similarly, it was shown that the test pieces consistent with Examples 35 to 68 have excellent joining strengths compared with the test piece consistent with Comparative Example 4 in which joining was performed without using any joining auxiliary.

Similarly, it was shown that the test pieces consistent with Examples 69 to 71 have excellent joining strengths compared with the test piece consistent with Comparative Example 6 in which joining was performed without using any joining auxiliary.

This is assumed to be brought about because, when the joining auxiliaries consistent with the present Examples were applied to the joining end surfaces 1, the polyamide resins on the joint end surfaces 1 were activated by the reduction effect of the components (A) and the additive molded parts P2 were injection welded to the activated joining end surfaces 1, whereby both were strongly connected mainly by chemical bonding to be integrated in the recrystallization process of the melted polyamide resins.

The present invention is never limited to the above-mentioned Examples, and various changes can be made without departing from the scope of the present invention. For example, although the above-mentioned Examples describe polyamide resin integrally molded products manufactured by means of injection welding, the polyamide resin integrally molded products can be also manufactured by means of ultrasonic welding, vibration welding or the like by mutually welding the joint sites of the polyamide resin molded products by use of the joining auxiliary according to the present invention.

## Claims

1. A polyamide resin integrally molded product comprising:
a polyamide resin molded product to a joint site of which a joining auxiliary is applied; and
a polyamide resin to form an additive molded product part, which is welded to the joint site of the polyamide resin molded product to be integrated,
wherein the joining auxiliary contains:
trihydroxybenzene and/or trihydroxybenzoic acid as a component (A); and
an organic solvent which is capable of dissolving or dispersing the component (A), as a component (B).

2. A polyamide resin integrally molded product comprising:
a polyamide resin molded product; and
another polyamide resin molded product, to at least one joint site of the polyamide resin molded products, a joining auxiliary being applied to mutually weld and integrate the joint sites,
wherein the joining auxiliary contains:
trihydroxybenzene and/or trihydroxybenzoic acid as a component (A); and
an organic solvent which is capable of dissolving or dispersing the component (A), as a component (B).

3. The polyamide resin integrally molded product according to claim 1 or 2, wherein the component (A) further contains dihydroxybenzene and/or dihydroxybenzoic acid.

4. The polyamide resin integrally molded product according to any one of claims 1 to 3, wherein a content of the component (A) is not less than 1 wt% and not more than 50 wt%, and a content of the component (B) is not less than 50 wt% and not more than 99 wt%.

5. The polyamide resin integrally molded product according to any one of claims 1 to 4, wherein the component (B) is a mixed organic solvent obtained by mixing two or more sorts of the organic solvents.

6. A method for manufacturing a polyamide resin integrally molded product, comprising the steps of:
applying a joining auxiliary to a joint site of a polyamide resin molded product; and
welding a polyamide resin which is to form an additive molded product part to the joint site of the polyamide resin molded product,
wherein the joining auxiliary contains:
trihydroxybenzene and/or trihydroxybenzoic acid as a component (A); and
an organic solvent which is capable of dissolving or dispersing the component (A), as a component (B).

7. A method for manufacturing a polyamide resin integrally molded product, comprising the steps of:
applying a joining auxiliary to at least one joint site of polyamide resin molded products; and
welding the joint sites mutually,
wherein the joining auxiliary contains:
trihydroxybenzene and/or trihydroxybenzoic acid as a component (A); and
an organic solvent which is capable of dissolving or dispersing the component (A), as a component (B).

8. The method for manufacturing the polyamide resin integrally molded product according to claim 6 or 7, wherein the component (A) further contains dihydroxybenzene and/or dihydroxybenzoic acid.

9. The method for manufacturing the polyamide resin integrally molded product according to any one of claims 6 to 8, wherein a content of the component (A) is not less than 1 wt% and not more than 50 wt%, and a content of the component (B) is not less than 50 wt% and not more than 99 wt%.

10. The method for manufacturing the polyamide resin integrally molded product according to any one of claims 6 to 9, wherein the component (B) is a mixed organic solvent obtained by mixing two or more sorts of the organic solvents.

11. A joining auxiliary for polyamide resin containing:
trihydroxybenzene and/or trihydroxybenzoic acid as a component (A); and
an organic solvent which is capable of dissolving or dispersing the component (A), as a component (B).

12. The joining auxiliary for polyamide resin according to claim 11, wherein the component (A) further contains dihydroxybenzene and/or dihydroxybenzoic acid.

13. The joining auxiliary for polyamide resin according to claim 11 or 12, wherein a content of the component (A) is not less than 1 wt% and not more than 50 wt%, and a content of the component (B) is not less than 50 wt% and not more than 99 wt%.

14. The joining auxiliary for polyamide resin according to any one of claims 11 to 13, wherein the component (B) is a mixed organic solvent obtained by mixing two or more sorts of the organic solvents.
